# EUROPÄISCHE PATENTSCHRIFT

(11) **EP 0 447 955 B1**
(45) Veröffentlichungstag und Bekanntmachung des Hinweises auf die Patenterteilung: **08.12.1993**
(21) Anmeldenummer: 91103899.0
(22) Anmeldetag: 14.03.1991
(51) Int. Cl.: F16L 17/02

(54) **Rohrkupplung**
Pipe coupling
Raccord pour tuyau

(30) Priorität: 20.03.1990 CH 911/90
(43) Veröffentlichungstag der Anmeldung: 25.09.1991
(73) Patentinhaber: STRAUB FEDERNFABRIK AG, CH-7323 Wangs (CH)
(72) Erfinder: Straub, Immanuel, CH-7323 Wangs (CH)
(74) Vertreter: Patentanwälte Schaad, Balass, Menzl & Partner AG

(56) Entgegenhaltungen:
- EP-A- 0 186 728
- DE-U- 8 706 268

## Beschreibung

Die Erfindung betrifft eine Rohrkupplung gemäss dem Oberbegriff des Anspruches 1.

Rohrkupplungen dieser Art -wie sie beispielsweise aus der DE-C- 24 28 101 bekanntgeworden sind- haben die Rohrverbindungstechnik revolutioniert. Einerseits ergibt sich nämlich aus dem Umstand, dass die Dichtlippen vor der Montage in bezug auf den Nenndurchmesser der zu verbindenden Rohre Uebermass aufweisen, die Möglichkeit, die Kupplungen im vormontierten Zustand auf die Rohre aufzuschieben und sie mit diesen zusammen zu verlegen, wobei die Rohre einfach aneinandergereiht und die Kupplungen dann über die Stossfugen geschoben werden können. Andererseits führt das im Umfangssinne erfolgende Stauchen der Lippendichtung durch das verengungsfähige Gehäuse dazu, dass die radiale Dicke der Manschette zunimmt, so dass die Manschette nicht nur durch das Gehäuse gegen die Rohrwandung gepresst wird, sondern selbst das Bestreben hat, sich an die Rohroberfläche anzuschmiegen. Daraus ergibt sich ein Dichtvermögen, das auch bei rauher oder unregelmässiger Rohroberfläche nichts zu wünschen übrig lässt, zudem noch auf Dauer erhalten bleibt.

Aufgabe der vorliegenden Erfindung ist die Ausgestaltung der bekannten Rohrkupplung für höhere bzw. höchste Betriebsdrücke derart, dass die Wandstärke des Steges nicht auch unter dem Gesichtspunkt der Formstabilität des Gehäuses erhöht werden muss. Mit anderen Worten heisst dies, dass die Formstabilität des Gehäuses eine Steigerung erfährt, die höher ist als das der Steigerung der Wandstärke entsprechende Mass, wobei umgekehrt die Verengungsfähigkeit des Gehäuses auch bei gesteigerter Wandstärke gewährleistet sein soll. Im Ergebnis soll dabei die Druckfestigkeit der Kupplung gegenüber extrem hohen Drücke sozusagen durch eine eigentliche "Leichtbauweise" gesteigert werden. Gemeint ist damit eine Ausbildung, die sogar die mit dem Durchmesser der Kupplung (in Grössenordnungen von 2 Meter und mehr) steigende Verwindbarkeit des Gehäuses zu kompensieren vermag, ohne dass die Wandstärke hierfür gesteigert werden müsste. Dabei sollen die die Manschette berührenden Stützflächen im wesentlichen zylindrisch sein und hierfür das Einlageblech trotz höherer Drucke möglichst dünnwandig bleiben.

Diese Aufgabe wird durch die Merkmale des kennzeichnenden Teiles des Anspruches 1 gelöst.

Durch die Versetzung des Verschlusses aus dem Bereich des Spaltes wird der während der Montage als Spannvorrichtung wirkende Verschluss durch den unter den Schrauben hindurchragenden Endabschnitt des Gehäuses stabilisiert bzw. entlastet. Umgekehrt wird dieser Gehäuseabschnitt im Gegensatz zu den übrigen Gehäuseabschnitten nicht gezogen, sondern gestossen, wobei die Formänderung beim Verengen des Gehäuses nicht bloss nach Massgabe der Spannschrauben, sondern auch nach Massgabe der Gleitführung zustande kommt. Dadurch bleibt die regelmässige Verengungsfähigkeit des Gehäuses ungeschmälert erhalten, auch wenn die Wandstärke gesteigert wird.

Andererseits verhält sich das Gehäuse, während es noch verengungsfähig ist, wie ein geschlossener Ring insofern, als seine Endabschnitte nicht mehr nur durch die Spannschrauben miteinander verbunden, sondern auch gegeneinander abgestützt sind, so wie dies z.B. bei der Spannmuffe für Rohre gemäss der EP-A-0 186 728 der Fall ist, allerdings ohne dass die Endabschnitte des Gehäuses eine ungleiche Ausbildung hätten, um ineinandergesteckt werden zu können. Bei der bekannten Spannmuffe soll das Einlageblech wegfallen. Bei der vorliegenden Rohrkupplung hingegen bleibt das Einlageblech erhalten und das Gehäuse längsgespalten, es ist aber im Bereich des Verschlusses durchgehend, so dass irgendwelchen unerwünschten Deformationen nicht bloss die zwischen den Verschlussteilen herrschende Reibung, sondern auch die Eigensteifigkeit des Gehäuses entgegenwirkt: Deformationen, die extrem hohe Drücke in den vom Verschluss weglaufenden seitlichen Abschnitten des Gehäuses hervorzurufen bestrebt sind, können nicht zu einer Einengung des Manschettenquerschnittes im Bereiche des Verschlusses führen.

Weitere vorteilhafte Ausgestaltungen des Erfindungsgegenstandes ergeben sich aus den abhängigen Ansprüchen.

Die Erfindung wird nachfolgend anhand des in der Zeichnung dargestellten Ausführungsbeispiels näher erläutert. Es zeigt
- Figur 1: in perspektivischer Darstellung ein Kupplungsgehäuse ohne Manschette und
- Figur 2: die obere Kupplungshälfte im Schnitt nach der Linie II-II in Figur 1
- Figur 3: eine Variante des Kupplungsgehäuses

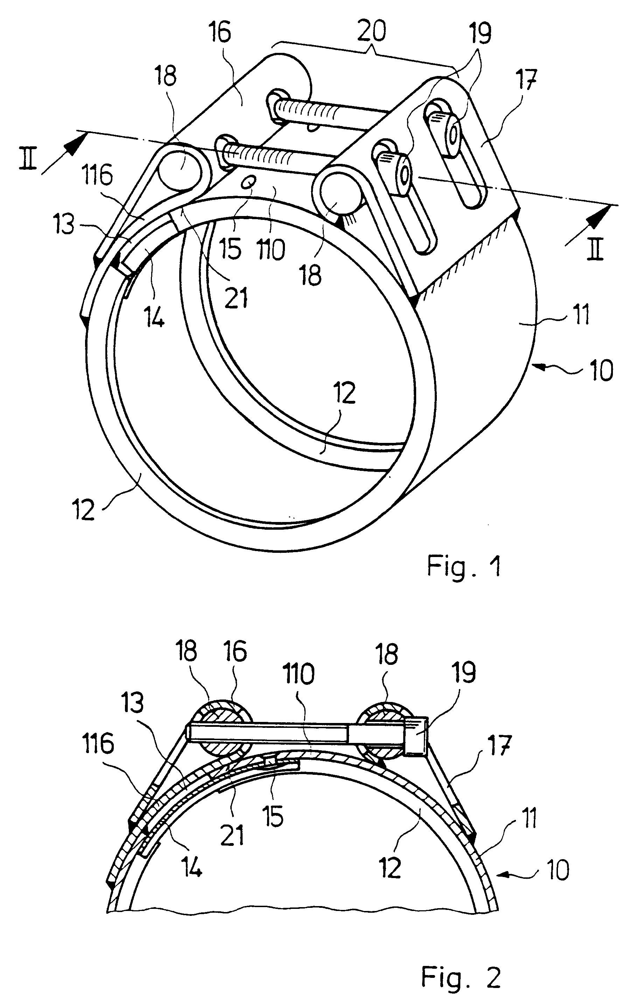

Das in Figur 1 dargestellte, der Länge nach gespaltene Gehäuse 10 besitzt einen zylindrischen Mantel 11 und einwärts umgebogene Endwände 12. Das den Gehäusespalt 13 überbrückende Einlageblech 14 ist analog ausgebildet, so dass die nicht dargestellte Elastomermanschette am Umfang und stirnseitig eingeschlossen ist. In Figur 2 ist erkennbar, dass das Einlageblech 14 bei 15 an dem einen zum Spalt 13 auslaufenden Endabschnitt des Gehäusemantels 11 verankert ist.

Am Gehäusespalt 13 sind zwei Spannlaschen 16 und 17 angeschweisst, deren freie Endkanten umgebogen sind und je einen Spannstab 18 umschliessen, die ihrerseits mittels zweier Spannschrauben 19 miteinander verbunden sind. Die Teile 16 bis 19 bilden einen gesamthaft mit 20 bezeichneten Verschluss, der in bezug auf den Spalt 13 im Umfangssinne versetzt ist. Die Anordnung ist so getroffen, dass der unter den Spannschrauben 19 sich hindurch erstreckende Endabschnitt 110 des Gehäuses unter die Spannlasche 16 greift, die eine Gleitführung 21 für diesen Endabschnitt bildet. Hierfür besitzt die Spannlasche eine tragfähige Verankerung, indem ihr innerer Schenkel 116 weit hinter den Gehäusespalt 13 zurückgezogen und mit dem Mantel 11 des Gehäuses an zwei im Umfangssinne beabstandeten Stellen verbunden ist.

Durch Anziehen der beiden Spannschrauben 19 lässt sich der Innendurchmesser des gesamten Gehäuses 10 wie bei einer Rohrschelle verkleinern. Dabei wird der die Gleitführung 21 untergreifende Endabschnitt 110 des Gehäuses in den Raum unter der Spannlasche 16 in Richtung auf den anderen Endabschnitt hineingestossen, wobei das Kupplungsgehäuse, obwohl es noch voll verengungsfähig ist, im Bereich des Verschlusses 20 ein durchgehend ausgebildetes Gehäuse darstellt. Hierdurch wird hinsichtlich der regelmässigen Verengungsfähigkeit des Gehäuses auch eine grössere Wandstärke kompensiert, bzw. die Stabilität des geschlossenen Kupplungsgehäuses über das Mass hinaus gesteigert, die sich aus einer gegebenen Wandstärke ergeben würde.

Anders betrachtet ergibt sich, dass durch das Versetzen des Verschlusses bezüglich des Spaltes das Gehäuse in zwei im Querschnitt durchgehend gleiche Segmente aufgeteilt wird, von denen das eine gezogen und das andere ohne radiale Versetzung unter die Gleitführung gestossen wird. Im geschlossenen Zustand liegen der Gehäusespalt und die Stossfuge zwischen den Spannlaschen nicht übereinander, vielmehr liegt die Stossfuge über einem durchgehenden Gehäuseabschnitt, der den Verschluss in radialer Richtung stabilisiert und Deformationen unter Druckeinwirkung im Verschlussbereich und in den seitlich anschliessenden Bereichen verhindert.

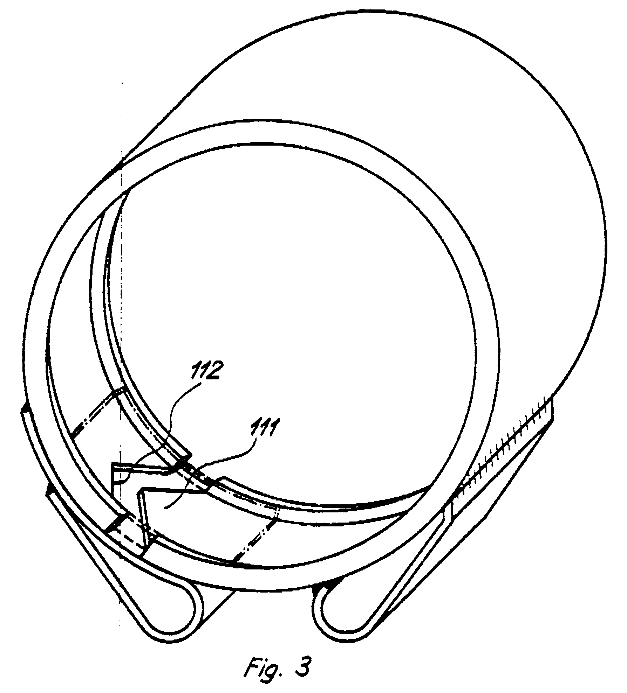

Bei der in Figur 3 gezeigten Variante weist der Gehäusemantel 11 an einem seiner Endabschnitte einen Stützlappen 111 auf, der im montierten Zustand in eine entsprechende Ausnehmung 112 des anderen Endabschnittes eingreift. Hierbei lassen sich ganz erhebliche Rohrtoleranzen verkraften; die dünne Blecheinlage wird auch dann gegen hohe Drücke hinreichend abgestützt, wenn der Spalt z.B. bei einem Rohr mit maximaler Plus-Abweichung des Durchmessers vom Nennwert weit offen bleibt.

## Patentansprüche

1. Rohrkupplung mit einer im Querschnitt etwa C-förmigen Elastomer-Dichtungsmanschette, deren sich gegeneinander erstreckende Dichtlippen mittels je eines an der Manschette angeformten Ringwulstes auf dem Manschettensteg abgestützt sind und die in vormoniertem Zustand der Rohrkupplung von dem zylindrischen Mantel eines durch einen Verschluss mit Spannschrauben verengbaren Gehäuses und von einer zwischen Manschette und Gehäuse eingelegten, den Längsspalt des Gehäuses überbrückenden Blecheinlage sowie von den radialen Endwänden des Gehäuses und der Blecheinlage umschlossen ist, wobei die Dichtlippen der Manschette vor dem Zusammenziehen des Gehäuses in bezug auf den Nenndurchmesser der zu kuppelnden Rohre Uebermass aufweisen und beim Zusammenziehen des Gehäuses durch Druckwirkung der Ringwülste im Umfangssinne stauchbar und satt an die Rohrwandung anpressbar sind, dadurch gekennzeichnet, dass der Verschluss (20) in bezug auf den Gehäusespalt (13) im Umfangssinne versetzt und der Gehäusespalt von aussen von einer unter den Bereich der Spannschrauben hindurchgreifenden Gleitführung (21) überbrückt ist, die an dem einen Endabschnitt des Gehäusemantels (11) verankert ist und eine den anderen Endabschnitt des Mantels (11) übergreifende im radialen Plan gekrümmte Führungsfläche aufweist.

2. Rohrkupplung nach Anspruch 1, dadurch gekennzeichnet, dass der eine Endabschnitt des Mantels wenigstens einen Stützlappen und der andere Endabschnitt eine im wesentlichen komplementäre Ausbildung aufweist.

3. Rohrkupplung nach Anspruch 1 oder 2, bei der der Verschluss (20) durch die Spannschrauben (19) miteinander verbundene Spannstäbe (18) aufweist, die von umgebogenen, am Gehäuse (10) angeschweissten Spannlaschen (16-17) umschlossen sind, dadurch gekennzeichnet, dass die eine Spannlasche (16) einen als Gleitführung (21) ausgebildeten Schenkel (116) aufweist.

4. Rohrkupplung nach Anspruch 3, dadurch gekennzeichnet, dass der genannte Spannlaschenschenkel (116) einen, den betreffenden Endabschnitt (110) des Gehäuses überlappenden Randabschnitt aufweist, der mit dem Gehäuse (10) an im Umfangssinne versetzten Stellen verbunden ist.

5. Rohrkupplung nach einem der vorangehenden Ansprüche, dadurch gekennzeichnet, dass das Einlageblech (14) an dem die Gleitführung (21) untergreifenden Endabschnitt (110) des Gehäuses (10) verankert ist.

## Claims

1. Pipe coupling having a cross-sectionally approximately C-shaped elastomer gasket, the sealing lips of which, extending towards each other, are supported on the gasket web by means of in each case an annular bead moulded on the gasket, and which is enclosed in the prefitted state of the pipe coupling by the cylindrical casing of a housing, which can be constricted by a closure with tensioning screws, and by a sheet-metal insert, inserted between gasket and housing and bridging the longitudinal gap of the housing, and also by the radial end walls of the housing and of the sheet-metal insert, in which arrangement, before the drawing together of the housing, the sealing lips of the gasket are overdimensioned with respect to the nominal diameter of the pipes to be coupled and, upon drawing together of the housing, can be compressed circumferentially by pressure exerted by the annular beads and can be pressed snugly against the pipe wall, characterised in that the closure (20) is offset circumferentially with respect to the housing gap (13) and the housing gap is bridged from outside by a sliding guide (21), which extends through under the region of the tensioning screws, is anchored on the one end section of the housing casing (11) and has a guide surface which is curved in radial plan and extends over the other end section of the casing (11).

2. Pipe coupling according to Claim 1, characterised in that the one end section of the casing has at least one supporting lug and the other end section has an essentially complementary design.

3. Pipe coupling according to Claim 1 or 2, in which the closure (20) has tensioning rods (18) which are connected to each other by the tensioning screws (19) and are enclosed by bent-around tensioning cover plates (16-17), welded on the housing (10), characterised in that the one tensioning cover plate (16) has a leg (116) designed as the sliding guide (21).

4. Pipe coupling according to Claim 3, characterised in that the said tensioning cover-plate leg (116) has an edge section which overlaps the end section (110) concerned of the housing and is connected to the housing (10) at points offset circumferentially.

5. Pipe coupling according to one of the preceding claims, characterised in that the metal insert sheet (14) is anchored on the end section (110) of the housing (10) extending under the sliding guide (21).

## Revendications

1. Raccord pour tuyaux, comprenant un manchon d'étanchéité en élastomère qui présente une section transversale sensiblement en forme de C et dont les lèvres d'étanchéité qui s'étendent l'une vers l'autre sont chacune soutenues sur la barrette du manchon par un bourrelet annulaire conformé sur le manchon, et qui est entouré, à l'état pré-monté du raccord pour tuyaux, par l'enveloppe cylindrique d'un carter pouvant être resserré par une fermeture avec des boulons de serrage, et par une tôle de revêtement insérée entre le manchon et le carter et recouvrant la fente longitudinale du carter, ainsi que par les parois terminales radiales du carter et de la tôle de revêtement, les lèvres d'étanchéité du manchon présentant avec le serrage du carter une surmesure par rapport au diamètre nominal des tuyaux à raccorder et pouvant être comprimées, lors du serrage du carter par l'effet de compression des bourrelets annulaires, dans le sens circonférentiel et appliquées à plat point contre la paroi du tuyau, **caractérisé en ce** que, par rapport à la fente (13) du carter, la fermeture (20) est déplacée dans le sens circonférentiel et que la fente du carter est recouverte extérieurement par un guidage à glissement (21) qui s'étend sous la région des boulons de serrage, est fixé sur l'une des sections terminales de l'enveloppe (11) du carter et présente une surface de guidage cintrée dans le plan radial qui recouvre l'autre section terminale de l'enveloppe (11).

2. Raccord pour tuyaux selon la revendication 1, caractérisé en ce que l'une des sections terminales de l'enveloppe comprend au moins une patte d'appui et que l'autre section terminale présente une conformation sensiblement complémentaire.

3. Raccord pour tuyaux selon l'une des revendications 1 ou 2, dans lequel la fermeture (20) comporte des barres de tension (18) reliées entre elles par les boulons de serrage (19) et entourées par des pattes de serrage (16-17) repliées soudées sur le carter (10), caractérisé en ce que l'une des pattes de serrage (16) comporte une branche (116) conformée en guidage à glissement (21).

4. Raccord pour tuyaux selon la revendication 3, caractérisé en ce que ladite branche (116) de la patte de serrage comporte une section latérale qui recouvre la section terminale correspondante (110) du carter et qui est couplée avec le carter (10) à des endroits décalés dans le sens circonférentiel.

5. Raccord pour tuyaux selon l'une des revendications précédentes, caractérisé en ce que la tôle de revêtement (14) est fixée sur la section terminale (110) du carter (10) qui passe sous le guidage à glissement (21).
